(19) Europäisches Patentamt
European Patent Office
Office européen des brevets

(11) EP 0 824 552 B1

(12) EUROPÄISCHE PATENTSCHRIFT

(45) Veröffentlichungstag und Bekanntmachung des Hinweises auf die Patenterteilung:
**08.12.1999 Patentblatt 1999/49**

(21) Anmeldenummer: **96915028.3**

(22) Anmeldetag: **08.05.1996**

(51) Int Cl.[6]: **C08F 4/28**

(86) Internationale Anmeldenummer:
**PCT/EP96/01924**

(87) Internationale Veröffentlichungsnummer:
**WO 96/35727 (14.11.1996 Gazette 1996/50)**

(54) **VERFAHREN ZUR HERSTELLUNG VON POLYMERISATEN VON VINYLISCHEN MONOMEREN MIT ENGER MOLEKULARGEWICHTSVERTEILUNG DURCH KONTROLLIERTE RADIKALISCHE POLYMERISATION**

PROCESS FOR PREPARING POLYMERS OF VINYL MONOMERS WITH NARROW MOLECULAR WEIGHT DISTRIBUTION BY CONTROLLED FREE-RADICAL POLYMERISATION

PROCEDE DE PREPARATION DE POLYMERES DE MONOMERES DE VINYLE A REPARTITION SERREE DU POIDS MOLECULAIRE PAR POLYMERISATION RADICALAIRE REGULEE

(84) Benannte Vertragsstaaten:
**BE DE ES FR GB IT NL**

(30) Priorität: **12.05.1995 DE 19516967**

(43) Veröffentlichungstag der Anmeldung:
**25.02.1998 Patentblatt 1998/09**

(73) Patentinhaber: **BASF AKTIENGESELLSCHAFT**
**67056 Ludwigshafen (DE)**

(72) Erfinder:
- **KOCH, Jürgen**
  **D-67141 Neuhofen (DE)**
- **FISCHER, Michael**
  **D-67071 Ludwigshafen (DE)**
- **MUELLEN, Klaus**
  **D-50939 Köln (DE)**
- **KLAPPER, Markus**
  **D-55128 Mainz (DE)**
- **BENFAREMO, Nicholas**
  **Wappinger Falls, NY 12590 (US)**
- **WUNDERLICH, Wiebke**
  **D-55128 Mainz (DE)**
- **PAULUS, Wolfgang**
  **D-67256 Weisenheim (DE)**

(56) Entgegenhaltungen:
**WO-A-94/11412** **US-A- 3 207 815**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 824 552 B1

## Beschreibung

Die vorliegende Erfindung betrifft Verfahren zur Herstellung von Polymerisaten von vinylischen Monomeren.

Weiterhin betrifft die vorliegende Erfindung die Verwendung der hierbei erhältlichen Polymerisate zur Herstellung von Formkörpern.

Die radikalische Polymerisation ist das am breitesten anwendbare Verfahren zur Polymerisation von vinylischen Monomeren. Sie erlaubt die Polymerisation einer Vielzahl von Monomeren mit unterschiedlicher Struktur, unterschiedlichen funktionellen Gruppen und Polarität. Auch die Copolymerisation verschiedener Monomerer miteinander ist möglich. Wegen unvermeidbarer Nebenreaktionen wie Kettenübertragung, Disproportionierung, Rekombination oder Eliminierung ist jedoch eine Kontrolle der Molekulargewichtsverteilung nur sehr schwer möglich. Normalerweise werden Polymere mit einem Polydispersitätsindex PDI von 2,0 oder größer erhalten. PDI ist dabei definiert als

$$PDI = \frac{M_w}{M_n}$$

wobei $M_w$ das Gewichtsmittel und $M_n$ das Zahlenmittel des Molekulargewichts sind.

Ein schon lange bekanntes Verfahren zur Herstellung von Polymeren mit enger Molekulargewichtsverteilung ist die anionische Polymerisation. Sie ist jedoch nur auf eine begrenzte Anzahl von Monomeren anwendbar. Unpolare Monomere, wie Styrol oder Butadien, lassen sich anionisch polymerisieren. Bei polaren Monomeren, wie z.B. n-Alkylacrylaten, ist die anionische Polymerisation sehr schwierig. Außerdem erfordert die anionische Polymerisation hochgereinigte Monomere und Lösungsmittel sowie den vollkommenen Ausschluß von Luftfeuchtigkeit.

Eine andere Methode zur Herstellung von Polymeren mit enger Molekulargewichtsverteilung ist die sogenannte "kontrollierte radikalische Polymerisation", die manchmal auch "lebende radikalische Polymerisation" genannt wird und beispielsweise in M.K. Georges et al, Trends in Polymer Science, Vol. 2, No. 2 (1994), Seite 66 bis 72 beschrieben wird. Die grundlegende Strategie dieser Methode besteht darin, die reaktiven radikalischen Kettenenden einer wachsenden Polymerkette zeitweise zu blockieren und wieder gezielt zu reaktivieren. Das dynamische Gleichgewicht zwischen aktiver und schlafender Form führt zu einer geringen stationären Konzentration freier Polymerradikale.

Für die Blockierung und Stabilisierung des radikalischen Kettenendes stehen verschiedene Methoden zur Verfügung. Es werden dazu stabile Radikale und/oder Metallsalze verwendet.

So ist beispielsweise die Verwendung von "Iniferten" bekannt, das sind Radikalbildner, die eine Polymerisation sowohl radikalisch initiieren als auch das Kettenende durch Kombination terminieren. Beispiele für photochemisch aktivierte Iniferter, wie Dithiocarbamate, sind in T. Otsu et al., Eur. Polym. J., Vol. 25, No. 7/8 (1989), Seite 643 bis 650 beschrieben. Diese photochemischen Iniferter sind jedoch sehr teure Verbindungen und eine photochemisch initiierte Polymerisation ist in der industriellen Praxis sehr unwirtschaftlich. Außerdem ist der Polydispersitätsindex teilweise sehr hoch. Weiterhin existieren thermische Iniferter, wie Tetramethylendisulfide, die beispielsweise in K. Endo et al., Macromolecules, Vol. 25 (1992), Seite 5554 bis 5556 beschrieben sind. Hierbei ist der PDI mit Werten zwischen 3 und 4 unbefriedigend hoch.

In der EP-A 135 280 wird die Verwendung stabiler N-Oxylradikale beschrieben, die reversibel mit den reaktiven Kettenenden kombinieren. Nach diesem Verfahren werden jedoch keine hochmolekularen Polymere, sondern nur Oligomere erhalten.

Aus der US-A 5 322 912 sind cyclische, sterisch abgeschirmte N-oxylradikale bekannt, die in Kombination mit konventionellen Initiatoren verwendet werden. Diese Systeme erlauben jedoch nicht die Polymerisation von Alkylacrylaten.

In der EP-A 489 370 wird die radikalisch initiierte Polymerisation in Gegenwart von Alkyljodiden beschrieben. Auch hierbei sind jedoch die Molekulargewichte unbefriedigend niedrig.

Den gleichen Nachteil weisen die in der EP-A 222 619 beschriebenen Produkte auf, die mit Hilfe von bimetallischen Katalysatoren mit Cyclopentadienylliganden hergestellt werden.

Alle bisher bekannten Methoden haben den Nachteil, daß die zur Kontrolle der Reaktion verwendeten Additive sehr teuer sind und die Verfahren somit unwirtschaftlich.

Der vorliegenden Erfindung lag daher die Aufgabe zugrunde, neue Verfahren zur Herstellung von Polymerisaten von vinylischen Monomeren zur Verfügung zu stellen, die die genannten Nachteile nicht aufweisen, die für polare und unpolare Monomere anwendbar sind, die eine Kontrolle des Molekulargewichts und der Molekulargewichtsverteilung erlauben und die unempfindlich gegen geringe Mengen an Feuchtigkeit sind.

Demgemäß wurden Verfahren zur Herstellung von Polymerisaten von vinylischen Monomeren gefunden, wobei die Polymerisation in Gegenwart von Radikalstartern und in Gegenwart von Elektronendonoren durchgeführt wird.

Weiterhin wurde die Verwendung der hierbei erhältlichen Polymerisate zur Herstellung von Formkörpern gefunden.

Als vinylische Monomere eignen sich besonders Vinylaromaten wie Styrol, 2-Vinylnaphthalin und 9-Vinylanthracen, substituierte Vinylaromaten wie p-Methylstyrol, α-Methylstyrol, p-Chlorstyrol, 2,4-Dimethylstyrol und 4-Vinylbiphenyl, $C_1$- bis $C_8$-Alkylester der Acrylsäure oder der Methacrylsäure, besonders $C_1$- bis $C_4$-Acrylate und $C_1$- bis $C_4$-Methacrylate, ungesättigte Dicarbonsäuren, beispielsweise aliphatische ungesättigte Dicarbonsäuren wie Malein- und Fumarsäure, oder deren Derivate wie Anhydride, Ester und Amide, insbesondere Anhydride, wie Maleinsäureanhydrid, oder Vinylcyanide, insbesondere Acrylnitril. Mischungen verschiedener Monomere können ebenfalls eingesetzt werden.

Bevorzugte Monomere sind Styrol, substituierte Styrole, $C_1$- bis $C_4$-Acrylate und $C_1$- bis $C_4$-Methacrylate, insbesondere Methylmethacrylat, sowie Acrylnitril.

Die bei dem erfindungsgemäßen Verfahren eingesetzten Radikalstarter sind an sich bekannt und beispielsweise in Ullmanns Encyclopädie der technischen Chemie, 4. Auflage, Band 15, Seite 187, beschrieben. Besonders geeignet sind Peroxide wie Dibenzoylperoxid und Cumolhydroperoxid und insbesondere Diazoverbindungen wie Azodiisobutyronitril (AIBN). Es können auch Mischungen verschiedener Radikalstarter eingesetzt werden.

Die molare Menge an Radikalstarter kann $10^{-6}$ bis 1 mol/l, vorzugsweise $10^{-4}$ bis $10^{-1}$ mol/l betragen.

Weiterhin wird das erfindungsgemäße Verfahren in Gegenwart von Elektronendonoren durchgeführt.

Als Elektronendonor werden Moleküle bezeichnet, die aufgrund von mesomeren und/oder induktiven Effekten einen Überschuß an π-Elektronen aufweisen.

Beispiele für Elektronendonoren sind Verbindungen der allgemeinen Formel I oder II

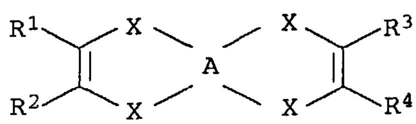

I

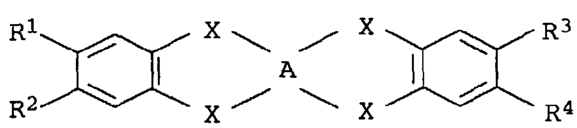

II

in der

X Schwefel oder Selen bedeutet,

$R^1$ bis $R^4$ Wasserstoff, $C_1$- bis $C_{20}$-Alkyl, vorzugsweise $C_1$- bis $C_6$-Alkyl, $C_1$- bis $C_{20}$-Alkoxy, vorzugsweise $C_1$- bis $C_6$-Alkoxy oder $C_6$- bis $C_{18}$-Aryl, vorzugsweise Phenyl

und

A für eine Doppelbindung,

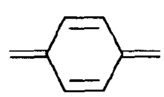 , 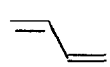

oder

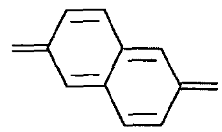

steht.

Bevorzugt sind Verbindungen der allgemeinen Formel I oder II, in denen $R^1$ und $R^2$ die gleiche Bedeutung aufweisen und auch $R^3$ und $R^4$ oder solche, in denen $R^1$ und $R^3$ gleich sind und auch $R^2$ und $R^4$, also symmetrische Verbindungen. Bevorzugt steht X für Schwefel und $R^1$ bis $R^4$ für Wasserstoff oder Methyl. Eine besonders bevorzuge Verbindung ist Tetrathiafulvalen (TTF)

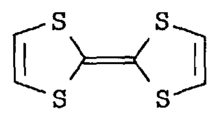

Weitere Beispiele für Elektronendonoren sind

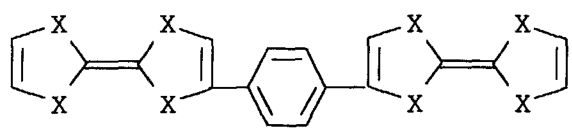

(III),

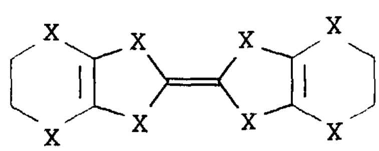

(IV) ,

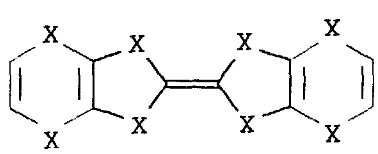

(V) ,

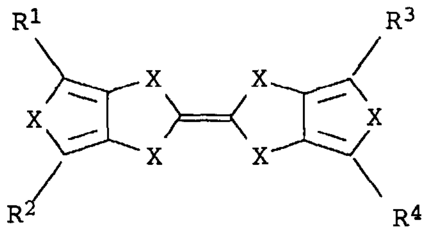

(VI),

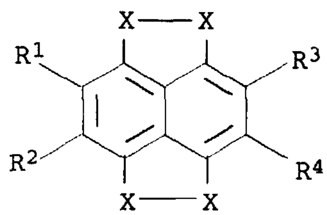

(VII)

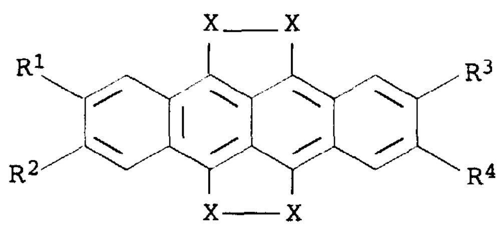

(VIII)

in denen

X Schwefel oder Selen bedeutet,

$R^1$ bis $R^4$ für Wasserstoff, $C_1$- bis $C_{20}$-Alkyl, vorzugsweise $C_1$- bis $C_6$-Alkyl, $C_1$- bis $C_{20}$-Alkoxy, vorzugsweise $C_1$- bis $C_6$-Alkoxy oder $C_6$- bis $C_{18}$-Aryl, vorzugsweise Phenyl stehen.

Bevorzugt sind auch hier die symmetrischen Verbindungen, in denen also entweder $R^1$ und $R^2$ sowie $R^3$ und $R^4$ gleich sind oder $R^1$ und $R^3$ sowie $R^2$ und $R^4$. Bevorzugt steht auch hier X für Schwefel und $R^1$ bis $R^4$ für Wasserstoff oder Methyl.

Weiterhin sind als erfindungsgemäße Elektronendonoren folgende Verbindungen geeignet:

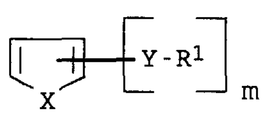

IX ,

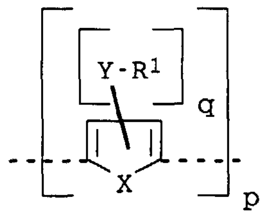

X ,

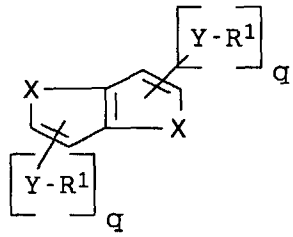

XI ,

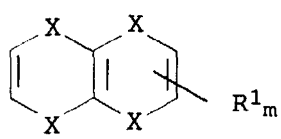

XII ,

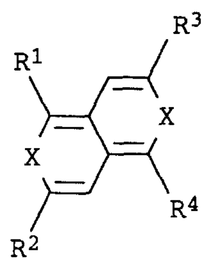

XIII ,

und

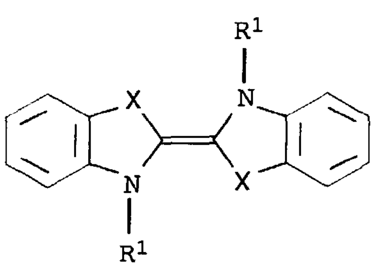

XIV ,

in denen

X für Schwefel oder Selen steht, vorzugsweise Schwefel

Y für Sauerstoff oder Schwefel

$R^1$ bis $R^4$ für Wasserstoff, $C_1$- bis $C_{20}$-Alkyl, vorzugsweise $C_1$- bis $C_6$-Alkyl oder $C_6$- bis $C_{18}$-Aryl, vorzugsweise Phenyl

m für ganze Zahlen von 0 bis 4

q für ganze Zahlen von 0 bis 2

und

p für ganze Zahlen von 2 bis 100.

Es können auch Mischungen der genannten Verbindungen als Elektronendonoren eingesetzt werden. Es kommen auch Mischungen dieser Elektronendonoren mit weiteren Verbindungen in Betracht.
Als solche können Verbindungen der allgemeinen Formel XV oder XVI

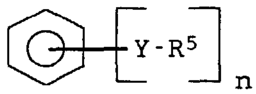

XV

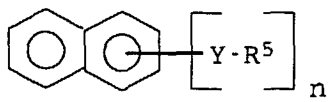

XVI

in der

Y Sauerstoff oder Schwefel bedeutet,

$R^5$ $C_1$- bis $C_{20}$-Alkyl, vorzugsweise $C_1$- bis $C_6$-Alkyl, $C_1$- bis $C_{20}$-Alkoxy, vorzugsweise $C_1$- bis $C_6$-Alkoxy oder $C_6$- bis $C_{18}$-Aryl, vorzugsweise Phenyl

und

n für ganze Zahlen von 2 bis 6 steht,

eingesetzt werden.
Ebenfalls als weitere Verbindungen geeignet sind Phenoxazine, Phenothiazin-Derivate oder Phenoselenazine.

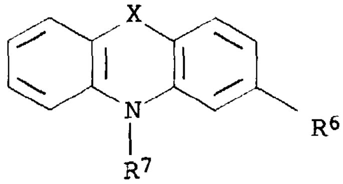

XVII

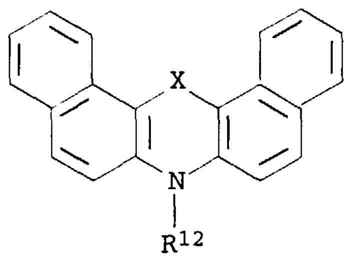

XVIII

in denen

X für Sauerstoff, Schwefel oder Selen, vorzugsweise Schwefel steht

und

$R^6$ ein Wasserstoffatom, $-C_1$- bis $C_5$-Alkyl, bevorzugt Methyl oder Ethyl, $-CF_3$, Halogen, bevorzugt -Cl, -CN, $-SR^a$, $-OR^a$ oder $-NR^aR^b$ ist,

$R^a$ $C_1$- bis $C_{25}$-Alkyl, vorzugsweise $C_1$- bis $C_{22}$-Alkyl, insbesondere $C_1$- bis $C_{10}$-Alkyl, beispielsweise Methyl, Ethyl, n-Propyl, i-Propyl, n-Butyl, i-Butyl oder t-Butyl oder $C_6$- bis $C_{18}$-Aryl, bevorzugt Phenyl bedeutet,

$R^b$ ein Wasserstoffatom, $C_1$- bis $C_{25}$-Alkyl, vorzugsweise $C_1$- bis $C_{22}$-Alkyl, insbesondere $C_1$- bis $C_{10}$-Alkyl, beispielsweise Methyl, Ethyl, n-Propyl, i-Propyl, n-Butyl, i-Butyl oder t-Butyl, $C_6$- bis $C_{18}$-Aryl, bevorzugt Phenyl darstellt,

$R^7$ ein Wasserstoffatom oder $\{T\}Z$ ist,

T für eine unverzweigte oder verzweigte $C_1$- bis $C_{25}$-Alkylengruppe, bevorzugt eine $C_1$- bis $C_{25}$-Alkylengruppe, besonders bevorzugt eine $C_1$- bis $C_{10}$-Alkylengruppe, beispielsweise Methylen, Ethylen, 2-Methyl-ethylen, n-Propylen oder n-Butylen steht,

Z -OH, $-OR^8$, $-SR^8$, $-NR^9R^{10}$ oder Q ist, worunter $-NR^9R^{10}$ oder Q bevorzugt sind

$R^8$ $C_1$- bis $C_{25}$-Alkyl, bevorzugt $C_1$- bis $C_{22}$-Alkyl, insbesondere $C_1$- bis $C_{10}$-Alkyl, beispielsweise Methyl, Ethyl, n-Propyl, i-Propyl, n-Butyl, i-Butyl oder t-Butyl oder $C_6$- bis $C_{18}$-Aryl, bevorzugt Phenyl bedeutet,

$R^9$ ein Wasserstoffatom oder $C_1$- bis $C_{25}$-Alkyl, bevorzugt $C_1$- bis $C_{22}$-Alkyl, insbesondere $C_1$- bis $C_{10}$-Alkyl, beispielsweise Methyl, Ethyl, n-Propyl, i-Propyl, n-Butyl, i-Butyl oder t-Butyl oder $C_6$- bis $C_{18}$-Aryl, bevorzugt Phenyl bedeutet,

$R^{10}$ $C_1$- bis $C_{25}$-Alkyl, bevorzugt $C_1$- bis $C_{22}$-Alkyl, insbesondere $C_1$- bis $C_{10}$-Alkyl, beispielsweise Methyl, Ethyl, n-Propyl, i-Propyl, n-Butyl, i-Butyl oder t-Butyl oder $C_6$- bis $C_{18}$-Aryl, bevorzugt Phenyl bedeutet,

wobei

$R^9$ und $R^{10}$ auch miteinander und zusammen mit dem Stickstoffatom einen $C_4$- bis $C_7$-cyclo-N-aliphatischen Ring, bevorzugt einen $C_5$-cyclo-N-aliphatischen oder einen $C_6$-cyclo-N-aliphatischen Ring, bilden können, der sowohl unsubstituiert als auch mit einer oder mehreren $C_1$- bis $C_5$-Alkylgruppen, bevorzugt Methyl, Ethyl, n-Propyl oder i-Propyl, substituiert sein kann und der ein oder mehrere, bevorzugt ein, -O-, -S-, oder $-N(R^{11})$- worunter letztere Gruppe bevorzugt ist, enthalten kann, wobei die Gruppen -O-, -S- und $-N(R^{11})$- nicht direkt miteinander verbunden sind,

Q einen $C_4$- bis $C_7$-cycloaliphatischen Rest, vorzugsweise einen $C_5$- oder $C_6$-cycloaliphatischen Ring, der eine oder mehrere -O-, -S- oder $-N(R^{11})$- enthalten kann, worunter letztere Gruppe bevorzugt ist und wobei Q jeweils über ein Kohlenstoffatom mit T verknüpft ist, wobei die Gruppen -O-, -S- und $-N(R^{11})$

nicht direkt miteinander verbunden sind,

$R^{11}$ eine $C_1$- bis $C_{10}$-Alkylgruppe, bevorzugt $C_1$- bis $C_5$-Alkylgruppe, beispielsweise Methyl, Ethyl, n-Propyl, i-Propyl, n-Butyl, i-Butyl oder t-Butyl bedeutet,

$R^{12}$ für Wasserstoff, $C_1$- bis $C_{20}$-Alkyl, vorzugsweise $C_1$- bis $C_6$-Alkyl oder $C_6$- bis $C_{18}$-Aryl, vorzugsweise Phenyl.

Zu den bevorzugten Phenothiazinen zählen:

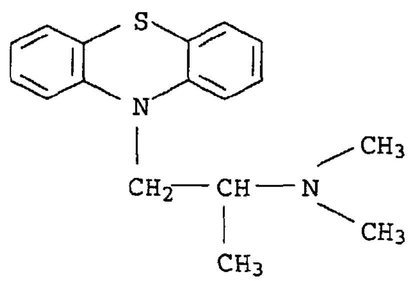

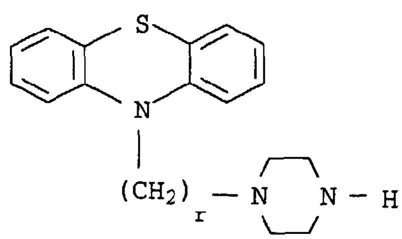

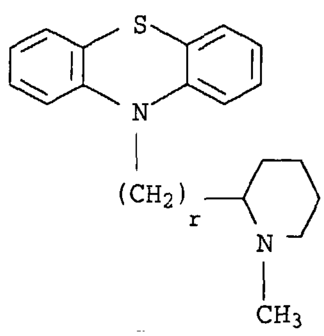

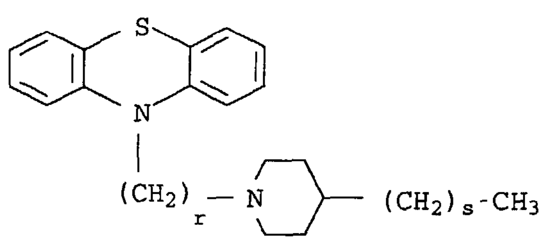

worin r jeweils für eine ganze Zahl von 2 bis 11 steht und s eine ganze Zahl von 1 bis 4 bedeutet.

Die als Elektronendonoren eingesetzten Verbindungen sind an sich bekannt oder nach an sich bekannten Verfahren herstellbar und beispielsweise in J.H. Perlstein, Angew. Chem. Int. Ed. Engl. 16 (1977), Seite 519 bis 534

und M.R. Bryce, Aldrichimica Acta, Vol. 18 (1985), Seite 73 bis 77 beschrieben.

Das molare Verhältnis von Elektronendonoren zu Radikalstartern kann im Bereich von 1:1 bis 3:1, vorzugsweise 1,6:1 bis 2,4:1 liegen.

Die Reaktionsbedingungen sind unkritisch, die Temperaturen können im Bereich von 0 bis 220°C, vorzugsweise im Bereich von 20 bis 150°C liegen, üblicherweise arbeitet man bei Normaldruck, man kann aber auch bei Drücken bis zu 30 bar arbeiten. Die Reaktionszeiten wählt man vorzugsweise so, daß man polymerisiert, bis das gewünschte Molekulargewicht erreicht wird, beispielsweise 1 Stunde bis 6 Tage.

Das erfindungsgemäße Verfahren kann auch in Gegenwart eines organischen Lösungsmittels durchgeführt werden. Als Lösungsmittel sind beispielsweise Tetrahydrofuran (THF), Toluol, Ethylbenzol oder deren Mischungen geeignet.

Bei dem erfindungsgemäßen Verfahren geht man vorzugsweise so vor, daß man den Radikalstarter und den Elektronendonor vorlegt und das Monomer oder die Monomere und gegebenenfalls das Lösungsmittel hinzugibt. Möglich ist jedoch auch eine umgekehrte Reihenfolge der Zugabe. Die Aufarbeitung der Polymerisate kann durch Ausfällen, beispielsweise in Methanol oder Hexan, erfolgen.

Die Molekulargewichte $M_n$ der entstehenden Polymerisate können in weiten Bereichen schwanken, beispielsweise von 5000 bis 500.000.

Das erfindungsgemäße Verfahren zeichnet sich insbesondere durch Wirtschaftlichkeit aus, es können polare und unpolare Monomere eingesetzt werden, es ist unempfindlich gegen geringe Mengen an Feuchtigkeit und es können auch Gemische von Monomeren zu statistischen Copolymerisaten umgesetzt werden. Die entstehenden Polymerisate weisen einen PDI von kleiner als 2 auf, sie können ein hohes Molekulargewicht haben und weisen eine höhere Thermostabilität auf.

Beispiele

Beispiele 1 bis 6

Herstellung von Polymethylmethacrylat (PMMA)

Methylmethacrylat (MMA) wurde über Calciumhydrid destilliert. THF und Toluol wurden über Kalium bzw. Natrium destilliert. AIBN wurde aus Methanol umkristallisiert. Kommerziell erhältliches TTF wurde ohne zusätzliche Reinigung eingesetzt.

Die Konzentration der Monomeren betrug 4,8 Mol pro Liter Lösungsmittel. Der Radikalstarter wurde in einer Menge von $2{,}4 \times 10^{-2}$ mol/L und der Elektronendonor wurde in einer Menge von $4{,}8 \times 10^{-2}$ mol/L eingesetzt. Die Polymerisationsreaktionen wurden in einem 50 ml-Schlenkrohr unter einer Argon-Atmosphäre durchgeführt. Zu der vorgelegten Menge Radikalstarter und Elektronendonor im mit Argon gespülten Schlenkrohr wurde durch ein Septum das Monomer und das Lösungsmittel mit einer Kanüle eingespritzt.

Die Aufarbeitung erfolgte durch Fällen der mit THF verdünnten Polymerlösung im zehnfachen Volumen Methanol. Die in Toluol hergestellten Polymere wurden in n-Hexan ausgefällt.

Die Molekulargewichte wurden mittels GPC (Gelpermeationschromatographie) bestimmt, die Eichung erfolgte mit PMMA-Standards.

Vergleichsbeispiele V1 bis V4

Herstellung von PMMA

Es wurde analog zu den Beispielen 1 bis 6 gearbeitet, jedoch ohne den Zusatz von TTF.

Die Reaktionsbedingungen und die Eigenschaften der Polymethylmethacrylate sind in Tabelle 1 zusammengestellt.

Die Thermostabilität läßt sich durch eine Thermogravimetrische Analyse (TGA) bestimmen. Es wurde gefunden, daß die Temperatur, bei der Masseverlust einsetzt, bei dem nach dem erfindungsgemäßen Verfahren hergestellten PMMA, zu deutlich höheren Temperaturen verschoben ist.

In der Abb. 1 sind die TGA-Kurven des PMMA aus Beispiel 2 und des PMMA aus Vergleichsbeispiel V2 zu sehen und in Abb. 2 die des PMMA aus Beispiel 5 und des PMMA aus Vergleichsbeispiel V4 ($N_2$-Atmosphäre, Heizrate 10 K/min).

Tabelle 1

| Versuch Nr. | Monomer | Radikal-starter | Elektro-nendonor | Lösungs-mittel | Temp. [°C] | Reaktions-zeit | Mn | Mw | PDI |
|---|---|---|---|---|---|---|---|---|---|
| 1 | MMA | AIBN | TTF | THF | 60 | 72 h | 21 500 | 31 800 | 1,48 |
| 2 | MMA | AIBN | TTF | THF | 60 | 72 h | 31 500 | 46 000 | 1,46 |
| 3 | MMA | AIBN | TTF | THF | 60 | 72 h | 32 300 | 50 100 | 1,54 |
| 4 | MMA | AIBN | TTF | THF | 60 | 72 h | 31 500 | 48 400 | 1,53 |
| 5 | MMA | AIBN | TTF | Toluol | 110 | 72 h | 19 000 | 26 000 | 1,38 |
| 6 | MMA | AIBN | TTF | Toluol | 110 | 72 h | 14 400 | 19 700 | 1,37 |
| V1 | MMA | AIBN | - | THF | 60 | 24 h | 51 300 | 103 100 | 2,01 |
| V2 | MMA | AIBN | - | THF | 60 | 24 h | 34 000 | 70 000 | 2,06 |
| V3 | MMA | AIBN | - | Toluol | 110 | 24 h | 7 700 | 35 800 | 4,65 |
| V4 | MMA | AIBN | - | Toluol | 110 | 24 h | 5 600 | 28 500 | 5,03 |

Beispiele 7 bis 10

Herstellung von Polystyrol

Es wurde analog zu den Beispielen 1 bis 6 gearbeitet, jedoch wurde als Monomer statt MMA Styrol eingesetzt.

Vergleichsbeispiele V5 bis V8

Herstellung von Polystyrol

Es wurde analog zu den Beispielen 7 bis 10 gearbeitet, jedoch ohne den Zusatz von TTF.

Die Reaktionsbedingungen und die Eigenschaften der Polystyrole sind in Tabelle 2 zusammengestellt.

Tabelle 2

| Versuch Nr. | Monomer | Radikal-starter | Elektro-nendonor | Lösungs-mittel | Temp. [°C] | Reaktions-zeit | Mn | Mw | PDI |
|---|---|---|---|---|---|---|---|---|---|
| 7 | Styrol | AIBN | TTF | THF | 60 | 72 h | 14 200 | 25 400 | 1,78 |
| 8 | Styrol | AIBN | TTF | THF | 60 | 72 h | 16 300 | 29 000 | 1,77 |
| 9 | Styrol | AIBN | TTF | Toluol | 110 | 72 h | 9 200 | 15 400 | 1,67 |
| 10 | Styrol | AIBN | TTF | Toluol | 110 | 72 h | 13 800 | 25 600 | 1,85 |
| V5 | Styrol | AIBN | - | THF | 60 | 24 h | 10 600 | 28 400 | 2,68 |
| V6 | Styrol | AIBN | - | THF | 60 | 24 h | 10 800 | 28 000 | 2,59 |
| V7 | Styrol | AIBN | - | Toluol | 110 | 24 h | 16 700 | 63 500 | 3,78 |
| V8 | Styrol | AIBN | - | Toluol | 110 | 24 h | 15 500 | 55 500 | 3,56 |

Beispiel 11

Herstellung eines Copolymerisates aus MMA und Styrol

Es wurde analog zu den Beispielen 1 bis 6 gearbeitet, jedoch wurden als Monomere MMA und Styrol eingesetzt (Molverhältnis 1:1).
Die Reaktionsbedingungen und die Eigenschaften des Copolymerisats sind in Tabelle 3 zusammengestellt.

Tabelle 3

| Versuch Nr. | Monomer | Radikalstarter | Elektronendonor | Lösungsmittel | Temp. [°C] | Reaktionszeit | Mn | Mw | PDI |
|---|---|---|---|---|---|---|---|---|---|
| 11 | Styrol/ MMA | AIBN | TTF | THF | 60 | 72 h | 21 100 | 32 000 | 1,51 |

Beispiele 12 bis 14

Herstellung von Polystyrol und Styrol-Acrylnitril-Copolymeren mit Phenothiazinen als Elektronendonor

Die Beispiele wurden analog den Beispielen 1 bis 6 ausgeführt, jedoch wurde als Elektronendonor kommerziell erhältliches Phenothiazin (V, $R^6$, $R^7$ = H) (PTA) und Dimethylaminopropylphenothiazin (V $R^6$ = H, $R^7$ = $-CH_2-CH(CH_3)-N(CH_3)_2$) (DMAPPTA) eingesetzt. Als Monomere wurden Styrol bzw. eine Mischung aus Styrol und Acrylnitril (AN) (Gewichtsverhältnis 3:1) verwendet. Als Radikalstarter diente kommerziell erhältliches Benzoylperoxid, das ohne zusätzliche Reinigung eingesetzt wurde. Das Benzoylperoxid und der Elektronendonor wurden äquimolar eingesetzt. Die Konzentration des Benzoylperoxids zu Monomer betrug 0,1 Mol.-%.

Die Reaktionsbedingungen und die Eigenschaften der erhaltenen Polymeren bzw. Copolymeren sind Tabelle 4 zu entnehmen.

Tabelle 4

| Versuch Nr. | Monomer | Radikal-starter | Elektro-nendonor | Lösungs-mittel | Temp. [°C] | Reaktions-zeit | Mn | Mw | PDI |
|---|---|---|---|---|---|---|---|---|---|
| 12 | Styrol | BPO | PTA | THF | 130 | 2 h | 178 600 | 300 000 | 1,68 |
| 13 | Styrol | BPO | DMAPPTA | THF | 130 | 25 h | 76 500 | 193 600 | 2,53 |
| 14 | Styrol/ AN | BPO | PTA | THF | 130 | 1 h | 28 600 | 83 000 | 2,9 |
| V 9 | Styrol | BPO | - | THF | 130 | 2 h | 71 200 | 192 300 | 2,7 |
| V 10 | Styrol/ AN | BPO | - | THF | 130 | 1 h | 2 900 | 40 000 | 14 |

Beispiel 15

Änderung des Molekulargewichts mit der Zeit

Der Versuch wurde wie in Beispiel 12 ausgeführt, allerdings wurde ein kleineres Verhältnis von BPO und PTA zu Styrol (0,29 g BPO, 0,18 g PTA, 104,15 g Styrol) gewählt. In den unten genannten Zeitabständen wurden Proben genommen, die Produkte in Methanol gefällt, gesammelt, bei 80°C im Vakuum getrocknet und untersucht. Die Ergebnisse sind Tabelle 5 zu entnehmen:

Tabelle 5

| Zeit | $M_n$ | $M_w$ | PDI |
|---|---|---|---|
| 30 min | 57 600 | 144 000 | 2,5 |
| 60 min | 69 000 | 173 000 | 2,5 |
| 3 h | 90 200 | 198 000 | 2,2 |
| 5 h | 88 800 | 213 000 | 2,4 |

Aus Tabelle 5 geht hervor, daß das Molekulargewicht mit längerer Reaktionszeit zunimmt.

**Patentansprüche**

1. Verfahren zur Herstellung von Polymerisaten von vinylischen Monomeren, dadurch gekennzeichnet, daß die Polymerisation in Gegenwart von Radikalstartern und in Gegenwart von Elektronendonoren der allgemeinen Formel I oder II

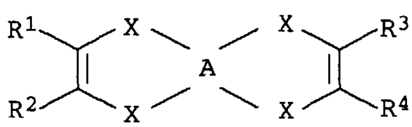

I,

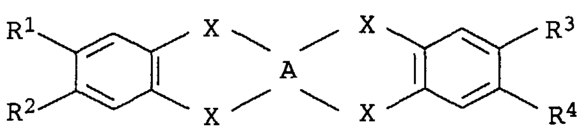

II,

in der

X Schwefel oder Selen bedeutet,

$R^1$ bis $R^4$ Wasserstoff, $C_1$- bis $C_{20}$-Alkyl, $C_1$- bis $C_{20}$-Alkoxy, oder $C_6$- bis $C_{18}$-Aryl

und

A für eine Doppelbindung,

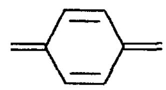 , 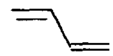

oder

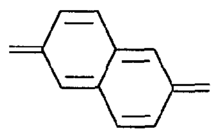

steht,

oder Elektronendonoren der allgemeinen Formeln III bis VIII

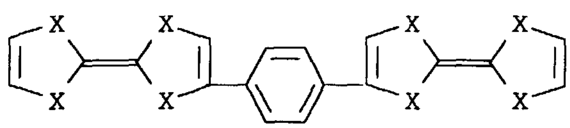 III,

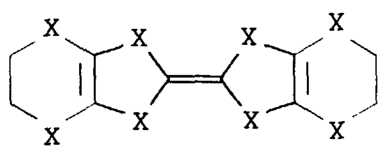 IV,

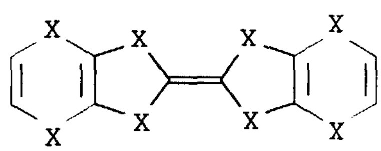 V,

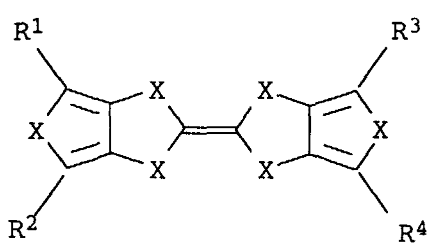 VI,

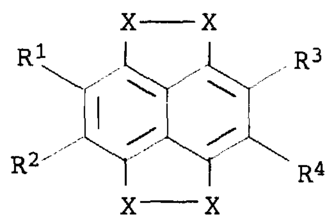

VII,

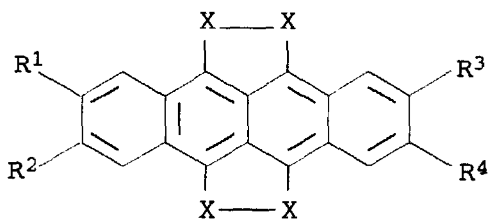

VIII

in denen

X Schwefel oder Selen bedeutet,

$R^1$ bis $R^4$ für Wasserstoff, $C_1$- bis $C_{20}$-Alkyl, $C_1$- bis $C_{20}$-Alkoxy oder $C_6$- bis $C_{18}$-Aryl stehen,

oder Elektronendonoren der allgemeinen Formeln IX bis XIV

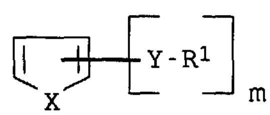

IX,

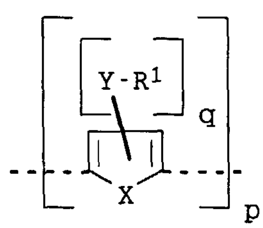

X,

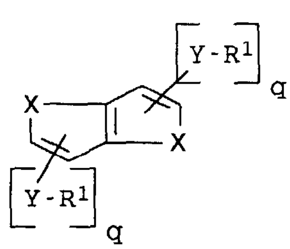

XI ,

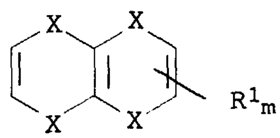

XII ,

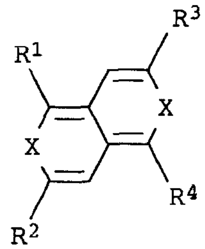

XIII,

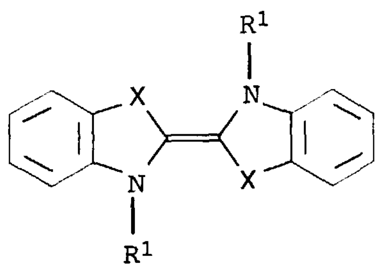

XIV,

in denen

| | |
|---|---|
| X | für Schwefel oder Selen steht, |
| Y | für Sauerstoff oder Schwefel, |
| $R^1$ bis $R^4$ | für Wasserstoff, $C_1$- bis $C_{20}$-Alkyl oder $C_6$- bis $C_{18}$-Aryl, |
| m | für ganze Zahlen von 0 bis 4 |
| q | für ganze Zahlen von 0 bis 2 |

und

p für ganze Zahlen von 2 bis 100 steht

oder Mischungen der genannten Elektronendonoren oder Mischungen der genannten Elektronendonoren mit Verbindungen der allgemeinen Formeln XV oder XVI

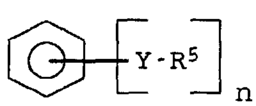

XV,

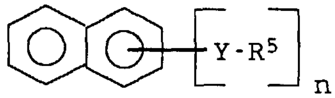

XVI

in der

Y Sauerstoff oder Schwefel bedeutet,

$R^5$ $C_1$- bis $C_{20}$-Alkyl, $C_1$- bis $C_{20}$-Alkoxy oder $C_6$- bis $C_{18}$-Aryl

und

n für ganze Zahlen von 2 bis 6 steht,

oder Verbindungen der allgemeinen Formel XVII oder XVIII

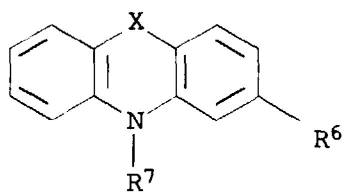

XVII,

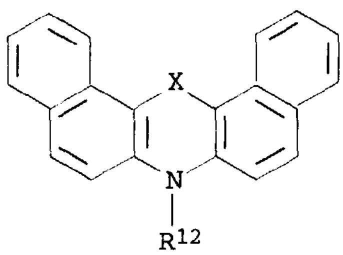

XVIII

in denen

X für Sauerstoff, Schwefel oder Selen steht

und

$R^6$ ein Wasserstoffatom, -$C_1$- bis $C_5$-Alkyl, -$CF_3$, Halogen, -CN, -$SR^a$, -$OR^a$ oder -$NR^aR^b$ ist,

$R^a$ $C_1$- bis $C_{25}$-Alkyl oder $C_6$- bis $C_{18}$-Aryl bedeutet,

$R^b$ ein Wasserstoffatom, $C_1$- bis $C_{25}$-Alkyl oder $C_6$- bis $C_{18}$-Aryl darstellt,

$R^7$ ein Wasserstoffatom oder {T}Z ist,

T für eine unverzweigte oder verzweigte $C_1$- bis $C_{25}$-Alkylengruppe steht,

Z -OH, -$OR^8$, -$SR^8$, -$NR^9R^{10}$ oder Q ist

$R^8$ $C_1$- bis $C_{25}$-Alkyl oder $C_6$- bis $C_{18}$-Aryl bedeutet,

$R^9$ ein Wasserstoffatom oder $C_1$- bis $C_{25}$-Alkyl oder $C_6$- bis $C_{18}$-Aryl bedeutet,

$R^{10}$ $C_1$- bis $C_{25}$-Alkyl oder $C_6$- bis $C_{18}$-Aryl bedeutet,

wobei

$R^9$ und $R^{10}$ auch miteinander und zusammen mit dem Stickstoffatom einen $C_4$- bis $C_7$-cyclo-N-aliphatischen Ring bilden können, der sowohl unsubstituiert als auch mit einer oder mehreren $C_1$- bis $C_5$-Alkylgruppen substituiert sein kann und der ein oder mehrere -O-, -S- oder -N($R^{11}$)- enthalten kann, wobei die Gruppen -O-, -S- und -N($R^{11}$)- nicht direkt miteinander verbunden sind,

Q einen $C_4$- bis $C_7$-cycloaliphatischen Rest der eine oder mehrere -O-, -S- oder -N($R^{11}$)- enthalten kann und wobei Q jeweils über ein Kohlenstoffatom mit T verknüpft ist, wobei die Gruppen -O-, -S- und -N($R^{11}$) nicht direkt miteinander verbunden sind,

$R^{11}$ einen $C_1$- bis $C_{10}$-Alkylgruppe bedeutet,

$R^{12}$ für Wasserstoff, $C_1$- bis $C_{20}$-Alkyl oder $C_6$- bis $C_{18}$-Aryl steht,

durchgeführt wird.

2. Verfahren zur Herstellung von Polymerisaten nach Anspruch 1, dadurch gekennzeichnet, daß als vinylische Monomere Vinylaromaten, substituierte Vinylaromaten, $C_1$- bis $C_8$-Alkylester der Acrylsäure oder der Methacrylsäure, ungesättigte Dicarbonsäuren oder deren Derivate, Vinylcyanide oder deren Mischungen eingesetzt werden.

3. Verfahren zur Herstellung von Polymerisaten nach den Ansprüchen 1 bis 2, dadurch gekennzeichnet, daß als vinylische Monomere Styrol, substituierte Styrole, $C_1$- bis $C_4$-Alkylester der Acrylsäure oder der Methacrylsäure, Acrylnitril oder deren Mischungen eingesetzt werden.

4. Verfahren zur Herstellung von Polymerisaten nach den Ansprüchen 1 bis 3, dadurch gekennzeichnet, daß als Elektronendonoren Tetrathiafulvalen

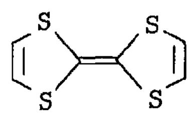

oder die Phenothiazinderivate der allgemeinen Formeln XI oder XII verwendet werden.

5. Verfahren zur Herstellung von Polymerisaten nach den Ansprüchen 1 bis 4, dadurch gekennzeichnet, daß man in einem organischen Lösungsmittel arbeitet.

6. Verfahren zur Herstellung von Polymerisaten nach den Ansprüchen 1 bis 5, dadurch gekennzeichnet, daß das molare Verhältnis von Elektronendonoren zu Radikalstartern im Bereich von 1:1 bis 3:1 liegt.

7. Verwendung der gemäß den Ansprüchen 1 bis 6 hergestellten Polymerisate zur Herstellung von Formkörpern.

## Claims

1. A process for preparing addition polymers of vinylic monomers, which comprises carrying out the polymerization in the presence of free-radical initiators and of electron donors of the formula I or II

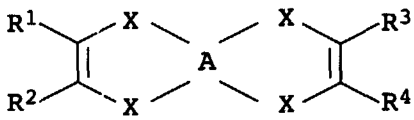

I,

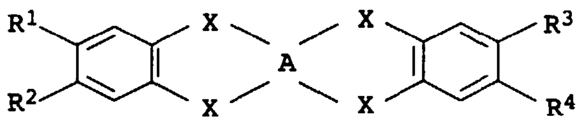

II,

where

X is sulfur or selenium,

$R^1$ to $R^4$ are hydrogen, $C_1$- to $C_{20}$-alkyl, $C_1$- to $C_{20}$-alkoxy or $C_6$- to $C_{18}$-aryl

and

A is a double bond,

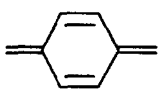

,

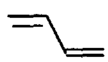

or

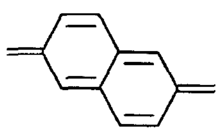

,

or electron donors of the formulae III to VIII

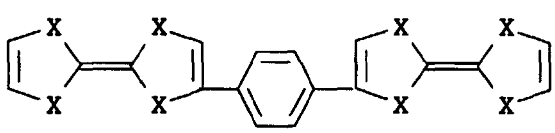

III,

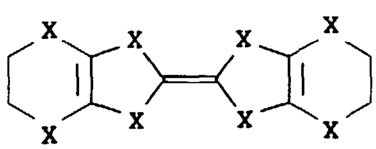

IV,

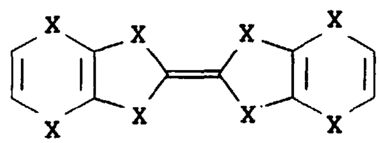

V,

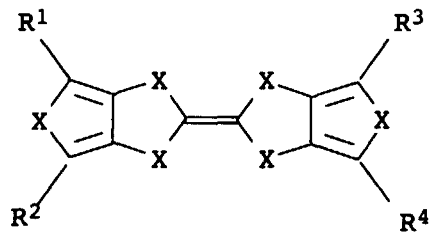

VI,

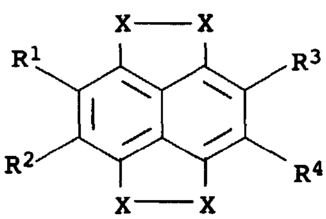

VII,

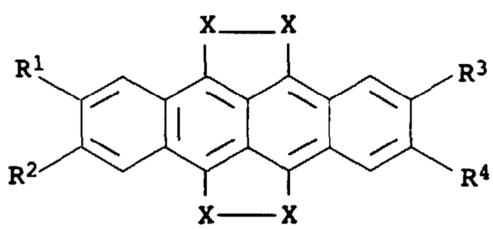

VIII

where

X is sulfur or selenium,

$R^1$ to $R^4$ are hydrogen, $C_1$- to $C_{20}$-alkyl, $C_1$- to $C_{20}$-alkoxy or $C_6$- to $C_{18}$-aryl,

or electron donors of the formulae IX to XIV

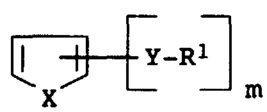

IX,

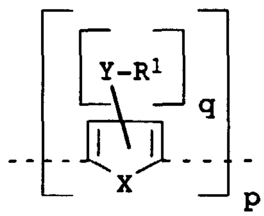

X,

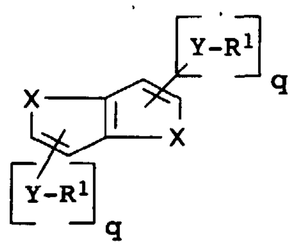

XI,

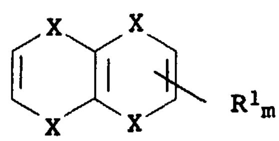

XII,

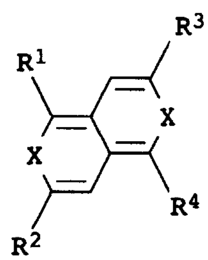

XIII,

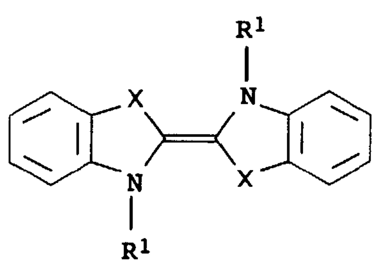

XIV,

where

| | |
|---|---|
| X | is sulfur or selenium, |
| Y | is oxygen or sulfur, |
| $R^1$ to $R^4$ | are hydrogen, $C_1$- to $C_{20}$-alkyl or $C_6$- to $C_{18}$-aryl, |
| m | is an integer from 0 to 4 |

q is an integer from 0 to 2

and

p is an integer from 2 to 100,

or mixtures of said electron donors, or mixtures of said electron donors with compounds of the formula XV or XVI

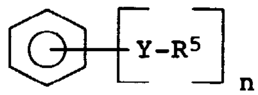

XV,

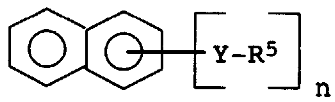

XVI

where

Y is oxygen or sulfur,

$R^5$ is $C_1$- to $C_{20}$-alkyl, $C_1$- to $C_{20}$-alkoxy or $C_6$- to $C_{18}$-aryl

and

n is an integer from 2 to 6,

or compounds of the formula XVII or XVIII

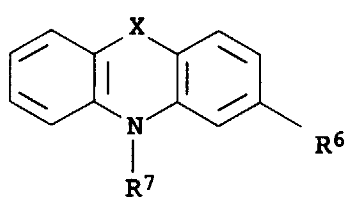

XVII,

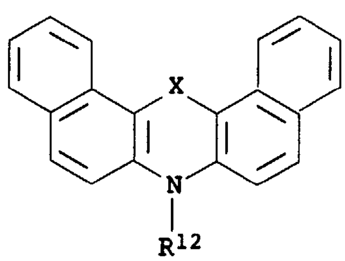

– XVIII

where

X is oxygen, sulfur or selenium

and

$R^6$ is hydrogen, $C_1$- to $C_5$-alkyl, $-CF_3$, halogen, -CN, $-SR^a$, $-OR^a$ or $-NR^aR^b$,

$R^a$ is $C_1$- to $C_{25}$-alkyl or $C_6$- to $C_{18}$-aryl,

$R^b$ is hydrogen, $C_1$- to $C_{25}$-alkyl or $C_6$- to $C_{18}$-aryl,

$R^7$ is hydrogen or {T}Z,

T is branched or unbranched $C_1$- to $C_{25}$-alkylene,

Z is -OH, $-OR^8$, $-SR^8$, $-NR^9R^{10}$ or Q

$R^8$ is $C_1$- to $C_{25}$-alkyl or $C_6$- to $C_{18}$-aryl,

$R^9$ is hydrogen or $C_1$- to $C_{25}$-alkyl or $C_6$- to $C_{18}$-aryl,

$R^{10}$ is $C_1$- to $C_{25}$-alkyl or $C_6$- to $C_{18}$-aryl,

where

$R^9$ and $R^{10}$, with one another and together with the nitrogen, can also form a $C_4$- to $C_7$-cyclo-N-aliphatic ring which can be either unsubstituted or substituted by one or more $C_1$- to $C_5$-alkyls and can contain one or more -O-, -S- or $-N(R^{11})-$, where -O-, -S- and $-N(R^{11})-$ are not joined directly to one another,

Q is a $C_4$- to $C_7$-cycloaliphatic radical which can contain one or more -O-, -S- or $-N(R^{11})-$, and where Q is in each case linked via a carbon to T and where -O-, -S- and $-N(R^{11})-$ are not joined directly to one another,

$R^{11}$ is $C_1$- to $C_{10}$-alkyl,

$R^{12}$ is hydrogen, $C_1$- to $C_{20}$-alkyl or $-C_6$- to $C_{18}$-aryl.

**2.** A process as claimed in claim 1, wherein the vinylic monomers employed are vinylaromatic compounds, substituted vinylaromatic compounds, $C_1$- to $C_8$-alkyl esters of acrylic or methacrylic acid, unsaturated dicarboxylic acids or their derivatives, vinyl cyanides, or mixtures thereof.

**3.** A process as claimed in claim 1 or 2, wherein the vinylic monomers employed are styrene, substituted styrenes, $C_1$- to $C_4$-alkyl esters of acrylic or methacrylic acid, acrylonitrile, or mixtures thereof.

**4.** A process as claimed in any of claims 1 to 3, wherein the electron donors employed are tetrathiafulvalene

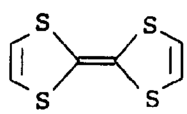

or the phenothiazine derivatives of the formula XVII or XVIII.

**5.** A process as claimed in any of claims 1 to 4, which is carried out in an organic solvent.

**6.** A process as claimed in any of claims 1 to 5, wherein the molar ratio of electron donors to free-radical initiators is in the range from 1:1 to 3:1.

**7.** The use of a polymer prepared as set forth in any of claims 1 to 6 for preparing moldings.

## Revendications

1. Procédé de préparation de polymères de monomères vinyliques, caractérisé en ce que la polymérisation est entreprise en présence d'initiateurs radicalaires et en présence de donneurs d'électrons de la formule générale I ou II

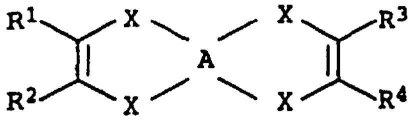

I,

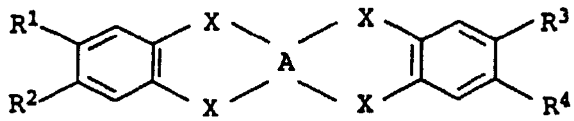

II,

dans laquelle

X représente le soufre ou le sélénium,
$R^1$ à $R^4$ représentent l'hydrogène, un radical alkyle en $C_1$ à $C_{20}$, alcoxy en $C_1$ à $C_{20}$ ou aryle en $C_6$ à $C_{18}$,

et

A représente une double liaison,

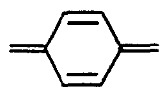

,

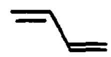

ou

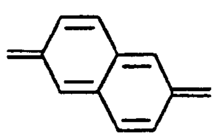

ou des donneurs
d'électrons des formule générales III à VIII

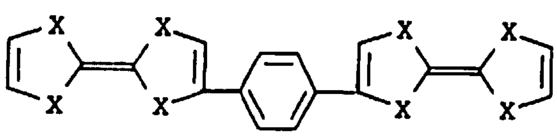

III,

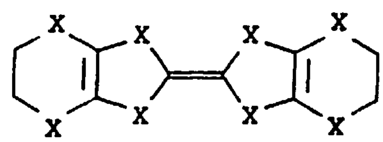

IV,

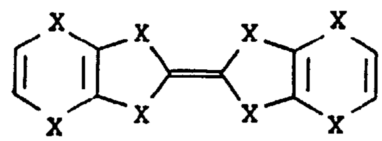

V,

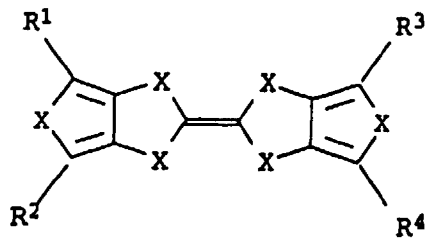

VI,

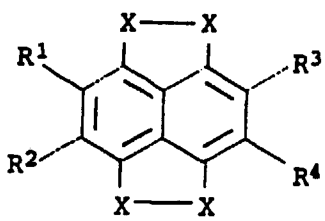

VII,

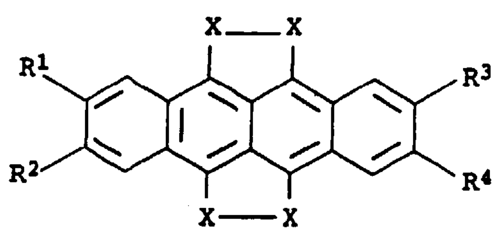

VIII

où

X représente le soufre ou le sélénium,

$R^1$ à $R^4$ représentent l'hydrogène, un radical alkyle en $C_1$ à $C_{20}$, alcoxy en $C_1$ à $C_{20}$ ou aryle en $C_6$ à $C_{18}$,

ou des donneurs d'électrons des formules générales IX à XIV

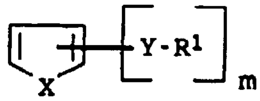

IX,

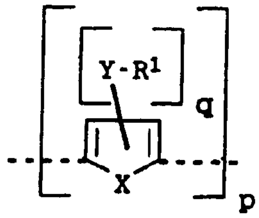

X,

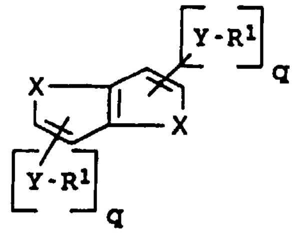

XI ,

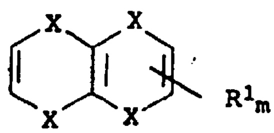

XII ,

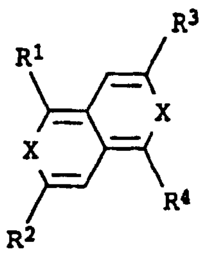

XIII;

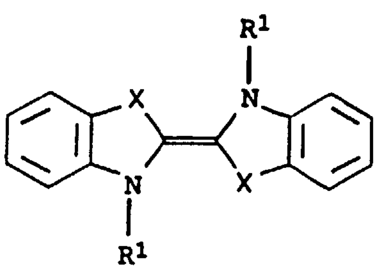

XIV,

où

| | |
|---|---|
| X | représente le soufre ou le sélénium, |
| Y | représente l'oxygène ou le soufre, |
| $R^1$ à $R^4$ | représentent l'hydrogène, un radical alkyle en $C_1$ à $C_{20}$ ou aryle en $C_6$ à $C_{18}$, |
| m | est un nombre entier de 0 à 4 |
| q | est un nombre entier de 0 à 2 |

et

p est un nombre entier de 2 à 100

ou des mélanges des donneurs d'électrons précités, ou des mélanges des donneurs d'électrons précités avec des composés des formules générales XV ou XVI

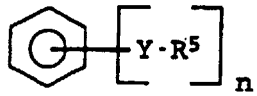

XV,

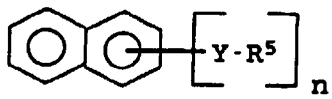

XVI

où

Y représente l'oxygène ou le soufre,
$R^5$ représente des radicaux alkyle en $C_1$ à $C_{20}$, alcoxy en $C_1$ à $C_{20}$ ou aryle en $C_6$ à $C_{18}$ et
n est un nombre entier de 2 à 6,

ou des composés des formules générales XVII ou XVIII

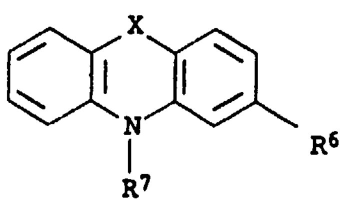

XVII,

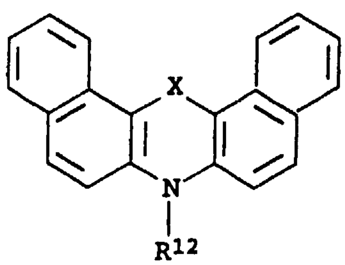

XVIII

où

X représente l'oxygène, le soufre ou le sélénium,

et

$R^6$ représente un atome d'hydrogène, un radical alkyle en $C_1$ à $C_5$, $-CF_3$, halogène, -CN, $-SR^a$, $-OR^a$ ou $-NR^aR^b$,
$R^a$ représente un radical alkyle en $C_1$ à $C_{25}$ ou aryle en $C_6$ à $C_{18}$,
$R^b$ représente un atome d'hydrogène, un radical alkyle en $C_1$ à $C_{25}$ ou aryle en $C_6$ à $C_{18}$,
$R^7$ représente un atome d'hydrogène ou {TZ},

T représente un radical alkyle ramifié ou non ramifié en $C_1$ à $C_{25}$,
Z représente -OH, -$OR^8$, -$SR^8$, -$NR^9R^{10}$ ou Q,
$R^8$ représente un radical alkyle en $C_1$ à $C_{25}$ ou aryle en $C_6$ à $C_{18}$,
$R^9$ représente un atome d'hydrogène ou un radical alkyle en $C_1$ à $C_{25}$ ou aryle en $C_6$ à $C_{18}$,
$R^{10}$ représente un radical alkyle en $C_1$ à $C_{25}$ ou aryle en $C_6$ à $C_{18}$,

avec

$R^9$ et $R^{10}$ pouvant également, ensemble et avec l'atome d'azote, former un noyau cyclo-N-aliphatique en $C_4$ à $C_7$, qui peut être non substitué ou substitué par un ou plusieurs radicaux alkyle en $C_1$ à $C_5$ et contenir un ou plusieurs -O-, -S- ou-N($R^{11}$), les groupes -O-, -S- et -N($R^{11}$) n'étant pas directement reliés entre eux,
Q représente un reste cycloaliphatique en $C_4$ à $C_7$ qui peut contenir un ou plusieurs -O-, -S- ou -N($R^{11}$) et où Q peut à chaque fois être lié à T via un atome de carbone, les groupes -O-, -S- et -N($R^{11}$) n'étant pas directement reliés entre eux,
$R^{11}$ représente un radical alkyle en $C_1$ à $C_{10}$,
$R^{12}$ représente l'hydrogène, un radical alkyle en $C_1$ à $C_{20}$ ou aryle en $C_6$ à $C_{18}$.

**2.** Procédé de préparation de polymères selon la revendication 1, caractérisé en ce que l'on met en oeuvre, en tant que monomères vinyliques, des vinylaromatiques, des vinylaromatiques substitués, des alkylesters en $C_1$ à $C_8$ de l'acide acrylique ou de l'acide méthacrylique, des acides dicarboxyliques insaturés ou leurs dérivés, des cyanures vinyliques ou leurs mélanges.

**3.** Procédé de préparation de polymères selon les revendications 1 à 2, caractérisé en ce que l'on, met en oeuvre, en tant que monomères vinyliques, du styrène, des styrènes substitués, des alkylesters en $C_1$ à $C_4$ de l'acide acrylique ou de l'acide méthacrylique, de l'acrylonitrile ou leurs mélanges.

**4.** Procédé de préparation de polymères selon les revendications 1 à 3, caractérisé en ce que l'on utilise comme donneurs d'électrons du tétrathiafulvalène

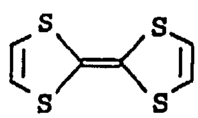

ou les dérivés de phénothiazine des formules générales XI ou XII.

**5.** Procédé de préparation de polymères selon les revendications 1 à 4, caractérisé en ce que l'on opère dans un solvant organique.

**6.** Procédé de préparation de polymères selon les revendications 1 à 5, caractérisé en ce que le rapport molaire des donneurs d'électrons aux initiateurs radicalaires se situe dans la plage de 1:1 à 3:1.

**7.** Utilisation des polymères préparés selon les revendications 1 à 6 pour la production d'articles moulés.

FIG. 1

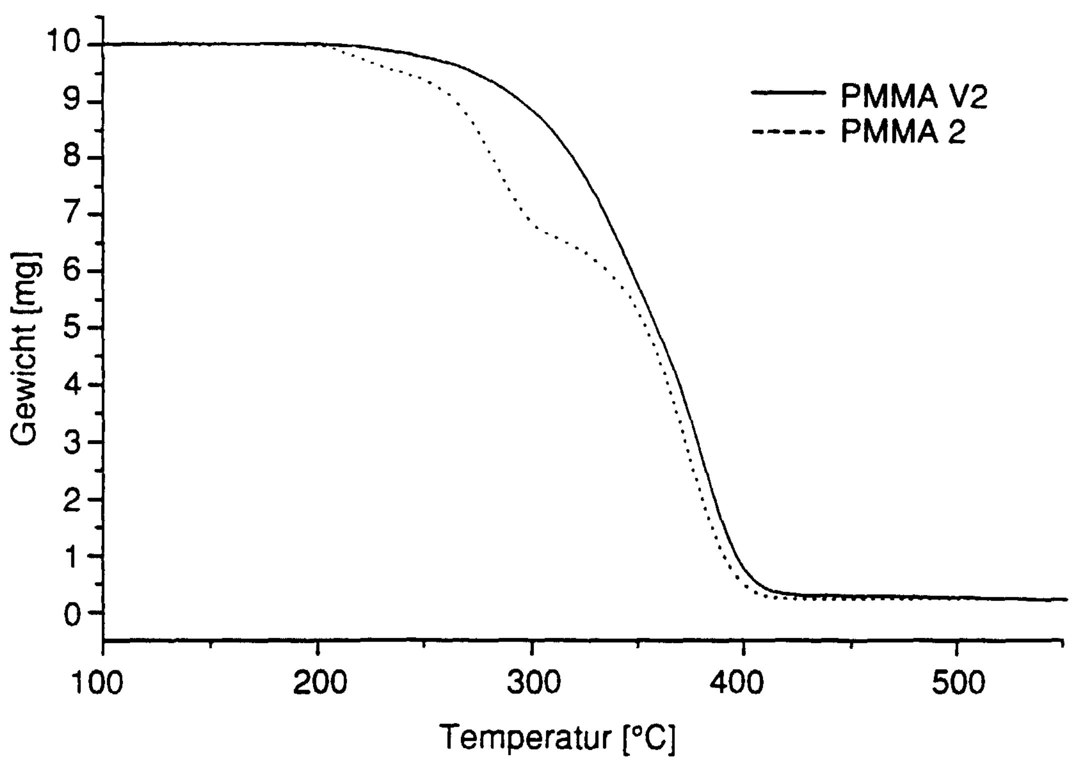
10
9
8
7
6
5
4
3
2
1
0
Gewicht [mg]
100
200
300
400
500
Temperatur [°C]
PMMA V2
PMMA 2

FIG. 2

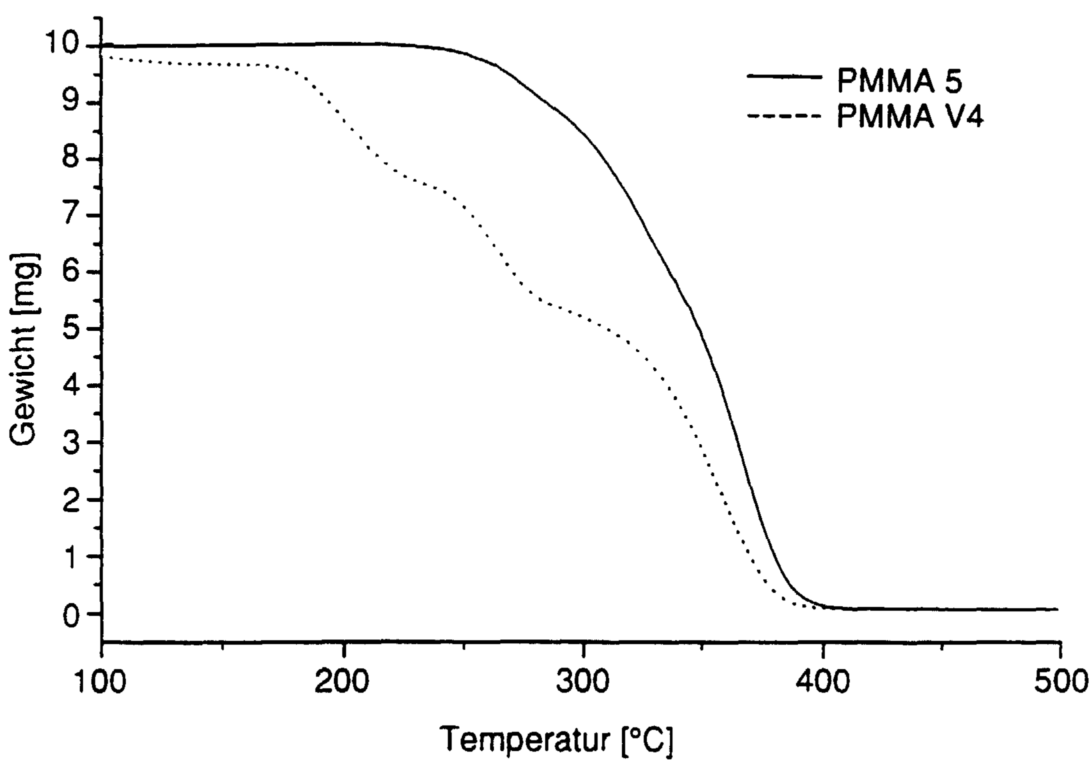
10
9
8
7
6
5
4
3
2
1
0
Gewicht [mg]
100
200
300
400
500
Temperatur [°C]
PMMA 5
PMMA V4